# EUROPÄISCHE PATENTSCHRIFT

(11) **EP 1 642 423 B1**
(45) Veröffentlichungstag und Bekanntmachung des Hinweises auf die Patenterteilung: **23.09.2009**
(21) Anmeldenummer: 04740006.4
(22) Anmeldetag: 17.06.2004
(51) Int. Cl.: H04L 12/40, H04L 12/64

(54) **NETZWERKKNOTEN UND VERFAHREN ZUR SPEICHERVERWALTUNG IN EINEM NETZWERKKNOTEN**
NETWORK NODE AND METHOD FOR MANAGING MEMORY IN A NETWORK NODE
NOEUD DE RÉSEAU ET PROCÉDÉ POUR GÉRER LA MÉMOIRE DANS UN NOEUD DE RÉSEAU

(30) Priorität: 30.06.2003 DE 10329179
(43) Veröffentlichungstag der Anmeldung: 05.04.2006
(73) Patentinhaber: Volkswagen AG, 38436 Wolfsburg (DE); AUDI AG, 85045 Ingolstadt (DE)
(72) Erfinder: BUHLMANN, Markus, 86562 Berg im Gau (DE); DÖRING, Martin, 38124 Braunschweig (DE); KRÜGER, Andreas, 80997 München (DE); NARBE, Burkhard, 38100 Braunschweig (DE)
(74) Vertreter: Patentanwälte Bressel und Partner
(86) Internationale Anmeldenummer: PCT/EP2004/006548
(87) Internationale Veröffentlichungsnummer: WO 2005/002145

(56) Entgegenhaltungen:
- US-A- 5 778 414
- PHILIPS SEMICONDUCTORS: "XA-C3; XA 16-bit microcontroller family 32K/1024 OTP/ROM CAN transport layer controller 1 UART, 1 SPI Port, CAN 2.0B," PHILIPS DATA SHEET, 25. Januar 2000 (2000-01-25), XP002166365
- BERWANGER J ET AL: "FLEXRAY - THE COMMUNICATION SYSTEM FOR ADVANCED AUTOMOTIVE CONTROL SYSTEMS" SAE TECHNICAL PAPER SERIES, SOCIETY OF AUTOMOTIVE ENGINEERS, WARRENDALE, PA, US, Bd. 2001-1-676, 5. März 2001 (2001-03-05), XP009023349 ISSN: 0148-7191

## Beschreibung

Die Erfindung betrifft einen Netzwerkknoten und ein Verfahren zur Verwaltung eines Speichers zwischen einem Kommunikationscontroller und einem Host-Prozessor eines Netzwerkknotens in einem Netzwerk.

In der Kraftfahrzeugtechnik nimmt die Anzahl der verbauten Steuergeräte kontinuierlich zu. Aus verschiedenen Gründen werden dabei nicht alle Steuergeräte in einem einzigen Netzwerk angeordnet, sondern funktional zusammenhängende Steuergeräte werden in Teilnetzwerken zusammengefasst, wobei dann die einzelnen Teilnetzwerke mit unterschiedlichen Protokollen und/oder Geschwindigkeiten arbeiten. Ein gegebenenfalls notwendiger Datenaustausch zwischen den Teilnetzwerken erfolgt dann über Gateways. Bekannte Bussysteme in Kraftfahrzeugen sind beispielsweise CAN_LOW_Speed- und CAN_HIGH_Speed-Bussysteme oder MOST-Bussysteme. Ein CAN-Bussystem ist ein ereignisgesteuertes Bussystem, d.h. jeder Netzknoten kann theoretisch jederzeit senden. Wollen dabei mehrere Netzknoten gleichzeitig senden, so führen diese ein Arbitrierungsverfahren durch, wobei sich der Netzknoten mit der höchsten Priorität durchsetzt. Aufgrund des zunehmenden Einsatzes sicherheitsrelevanter Netzknoten kommen verstärkt zeitgesteuerte Bussysteme oder zeit- und ereignisgesteuerte Bussysteme, wie beispielsweise FlexRay, zur Anwendung.

Unabhängig von der Art des verwendeten Bussystems wird ein Netzknoten im Wesentlichen durch ein Steuergerät gebildet. Dieses Steuergerät beinhaltet mindestens einen Transceiver, mittels dessen physikalisch Signale vom Bus empfangen oder auf den Bus gesendet werden können. Das Senden und Empfangen kann dabei in einem einzigen Bauteil erfolgen oder für Senden und Empfangen existieren jeweils separate Bauteile (Receiver und Transmitter). Der Transceiver ist mit einem Kommunikationscontroller verbunden, der unter anderem aus den empfangenen Botschaften den Dateninhalt extrahiert bzw. zu sendende Daten in protokollgerechte Botschaften umwandelt. Die extrahierten Daten bzw. die zu sendenden Daten sind in einem Speicherblock abgelegt, auf den der Kommunikationscontroller zugreifen kann. Des Weiteren umfasst das Steuergerät einen Host-Prozessor, der ebenfalls auf den Speicherblock zugreifen kann. Dieser Host-Prozessor ist dann beispielsweise mit Sensoren und/oder Aktuatoren verbunden, die dem Steuergerät zugeordnet sind. Der Host-Prozessor führt die eigentliche Datenauswertung durch und berechnet aus den empfangenen Daten Stellsignale für seine Aktuatoren und/oder erzeugt hieraus gegebenenfalls in Verbindung mit seinen Sensordaten zu sendende Daten für andere Netzknoten. Der zwischen dem Host-Prozessor und dem Kommunikationscontroller angeordnete Speicherblock kann als Dual-Ported-RAM ausgebildet sein.

Logisch besteht der Speicherblock aus Buffern, wobei bei einigen Bussystemen eine feste Zuordnung von Identifier bzw. Netzknoten und Buffern existiert. Ein solches Bussystem ist beispielsweise FlexRay.

Bei FlexRay existiert ein statischer Teil und ein dynamischer Teil, wobei das Verhältnis unterschiedlich festgelegt werden kann, so dass im Extremfall eine rein dynamische oder rein statische Übertragung erfolgt. Der statische Teil ist in Rahmen bzw. Slots unterteilt, wobei bestimmten Identifiern ein Rahmen bzw. Slot fest zugeordnet ist. Dabei ist eine FlexRay-Anforderung, dass die Rahmen bzw. Slots im statischen Teil alle gleich groß sein müssen. Im dynamischen Teil erlaubt die Spezifikation die Verwendung unterschiedlicher Rahmenlängen. Gegenwärtig ist die Payload, also die Nutzdatengröße im FlexRay-Protokoll mit maximal 254 Byte/Rahmen festgelegt. Entsprechend muss für jede ID daher ein Buffer mit 254 Byte Speichervermögen vorgehalten werden, unabhängig davon, ob diese auch ausgenutzt werden. Da die Dual-Ported-RAM relativ teuer sind, stellt dies ein nicht unbeachtliches Problem dar. Daher sind Überlegungen angestellt worden, die Buffer-Größe zu verkleinern. In der nächsten Generation der FlexRay-FPGA's werden daher nur 32 Byte/Buffer vorgehalten. Dies bedeutet, dass Nachrichten mit einer Maximallänge von 32 Byte übertragen werden können. Sollen dann von einem sicherheitsrelevanten Netzwerkknoten größere Dateninhalte von beispielsweise 64 Byte übertragen werden, so würde vorab der Dateninhalt auf zwei Botschaften aufgeteilt werden, denen jeweils ein Identifier zugeordnet ist. Bei FlexRay kann ein Netzwerkknoten mehrere unterschiedliche Identifier übertragen. Die Buffer-Größe begrenzt aber die maximal übertragbare Payload je Identifier.

Aus dem PHILIPS SEMICONDUCTORS: "XA-C3, XA 16-bit microcontroller family 32K/1024 OTP/ROM CAN transport lager controller 1 UART, 1 SPI PORT, CAN 2.0B," PHILIPS DATA SHEET, 25. Januar 2000 (2000-01-25), XP002166365 ist ein Netzwerkknoten in Form eines CAN-Controllers zum Senden und Empfangen von Daten-Botschaften bekannt, umfassend einen Kommunikationscontroller, einen Host-Prozessor und einen zwischen dem Host-Prozessor und dem Kommunikationscontroller angeordneten Speicher, wobei der Speicher als zentraler Speicherbaustein ausgebildet ist, wobei jeder Daten-Botschaft ein Block von Speicherplatz zugeordnet ist, wobei die Größe und Adresse programmierbar ist.

Aus der US 5 778 414 A ist ein Controller zum Empfang und Auswerten von Daten-Botschaften bekannt, wobei die Daten-Botschaften einen Header und Nutzdaten umfasst, wobei mindestens ein Teil des Headers in einem ersten Speicher und die Nutzdaten und gegebenenfalls der restliche Teil des Headers in einem zweiten Speicher abgelegt werden, wobei die Zugriffszeit auf den ersten Speicher kürzer als für den zweiten Speicher ist.

In BERWANGER et al.: "FlexRay - The Communication System for Advanced Automotive Control Systems" SAE TECHNICALS PAPER SERIES, SOCIETY OF AUTOMOTIVE ENGINEERS, WARRENDALE, PA, US, vol. 2001-1-676, 5 March 2001 (2001-03-05), XP009023349 ISSN: 0148-7191 ist der Aufbau eines FlexRay-Controllers beschrieben.

Der Erfindung liegt daher das technische Problem zugrunde, eine Anordnung und ein Verfahren zur Speicherverwaltung zu schaffen, mittels derer das Verhältnis zwischen Payload und Bufferkosten verbessert wird.

Die Lösung des technischen Problems ergibt sich durch die Gegenstände mit den Merkmalen der Patentansprüche 1 und 8. Weitere vorteilhafte Ausgestaltungen der Erfindung ergeben sich aus den Unteransprüchen.

Hierzu sind in den den Identifiern zugeordneten Buffern Steuerdaten abgelegt, die mindestens einen Verweis auf die zum Identifier zugehörigen Nutzdaten (Payload) enthalten, wobei die zugehörigen Nutzdaten im zugehörigen Buffer und in einem oder mehreren anderen Buffern abgelegt sind. Das Grundprinzip der Erfindung besteht also darin, trotz der festen Zuordnung den vorhandenen Speicherplatz effektiver zu verwalten. Dies kann dazu ausgenutzt werden, um bei gleicher Payload die Buffer zu verkleinern oder bei gleicher Buffergröße die übertragbare Payload zu vergrößern. Dies ist insbesondere deshalb interessant, da dann bei sich ändernder Payload mit den vorhandenen Buffergrößen durch das Speichermanagement weiter gearbeitet werden kann. Also neben einer Kostenersparnis wird auch der Einsatz flexibler.

Dabei sind die Buffer unterteilt in einen Teil für die Steuerdaten und einen Teil für die Nutzdaten bzw. Payload, wobei die Nutzdaten ausschließlich auf die Buffer aufgeteilt sind. Es wird also auf ein zusätzliches zentrales Speicherelement verzichtet. Der Vorteil dieser Anordnung ist, dass dies hardware-technisch weitgehend mit dem Stand der Technik identisch und somit kompatibel ist.

In einer bevorzugten Ausführungsform ist die Speichergröße aller Buffer gleich groß. Es ist jedoch auch denkbar, dass die Buffer der Identifier des statischen Teils größer als die Buffer der Identifier des dynamischen Teils gewählt werden.

In einer weiteren bevorzugten Ausführungsform umfassen die Steuerdaten mindestens ein Status-Bit, aus dem der Aktualisierungsstand der Nutzdaten erfassbar ist. Somit können sowohl der Host-Prozessor als auch der Kommunikationscontroller schnell erfassen, ob die Daten alt oder neu sind, wobei diese im letzten Fall ausgelesen werden müssen. Daher wird dieses Bit beim Schreiben von Daten gesetzt und beim Lesen zurückgesetzt.

In einer weiteren bevorzugten Ausführungsform umfassen die Steuerdaten jeweils ein Status-Bit, aus dem ein aktueller Zugriff auf den Buffer erfassbar ist. Hierdurch wird vermieden, dass der Host-Prozessor bzw. der Kommunikationscontroller auf einen Buffer zugreift, während der andere gerade den Dateninhalt überschreibt bzw. gerade ausliest.

Ein bevorzugtes Anwendungsgebiet der Erfindung ist der Einsatz in einem FlexRay-Controller.

Die Erfindung wird nachfolgend anhand eines bevorzugten Ausführungsbeispieles näher erläutert. Die Fig. zeigen:
- Fig. 1: ein schematisches Blockschaltbild eines FlexRay-Controllers (Stand der Technik),
- Fig. 2: eine schematische Darstellung einer Kommunikationsstruktur nach dem FlexRay-Protokoll (Stand der Technik),
- Fig. 3: eine schematische Darstellung einer Botschaft (Stand der Technik),
- Fig. 4: eine nicht erfindungsgemäße Ausführungsform mit einem zentralen Speicherelement,
- Fig. 5: eine erfindungsgemäße Ausführungsform mit fester Zuordnung von Buffern und Identifiern und
- Fig. 6: eine Ausführungsform mit nur teilweise fester Zuordnung.

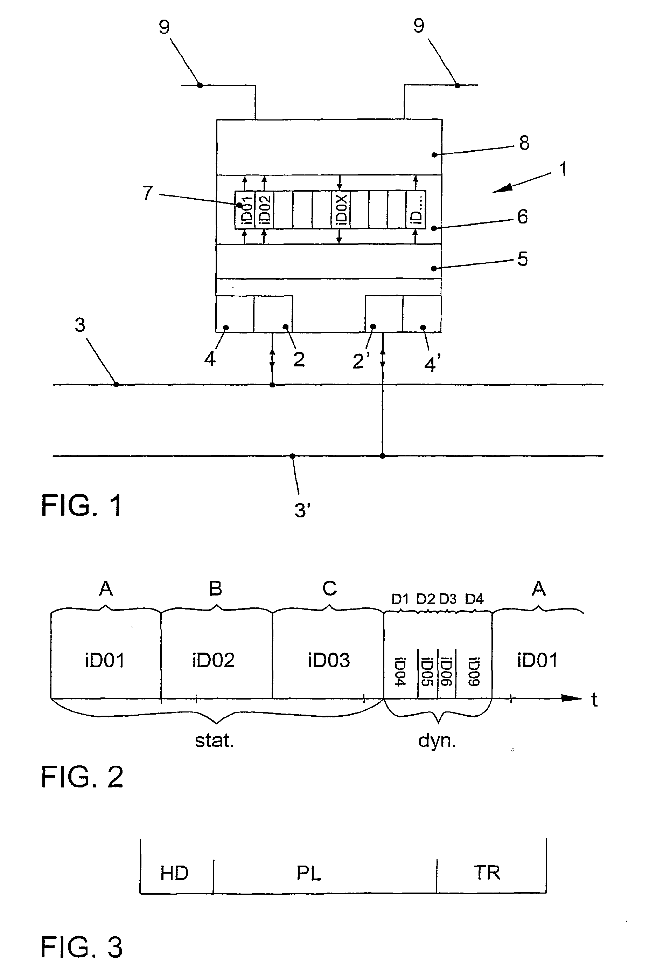

In der Fig. 1 ist ein schematisches Blockschaltbild eines FlexRay-Controllers 1 dargestellt, der über zwei Transceiver 2, 2' mit zwei Busleitungen 3, 3' verbunden ist, so dass eine redundante Kommunikation realisiert wird. Über die Transceiver 2, 2' sendet und empfängt der FlexRay-Controller 1 Daten-Botschaften. Die Umschaltung zwischen Sende- und Empfangsmodus erfolgt dabei mittels den Transceivern 2, 2' zugeordneten Bus-Guardians 4, 4'. Des Weiteren umfasst der FlexRay-Controller 1 einen Kommunikationscontroller 5, der verschiedene Aufgaben hat. Zum einen vergleicht dieser die redundanten Daten der Transceiver 2, 2' auf Übereinstimmung- Des Weiteren extrahiert dieser Dateninhalte aus empfangenen Daten-Botschaften bzw. erzeugt für zu sendende Daten die Daten-Botschaften gemäß FlexRay-Protokoll. Weiter umfasst der FlexRay-Controller 1 einen Speicher 6, der sich aus Buffern 7 zusammensetzt, die vorzugsweise als Dual-Ported RAM ausgebildet sind. Dabei ist jeder Nachricht eines FlexRay-Controllers 1, der jeweils einen Netzwerkknoten bildet, mindestens ein eindeutiger Identifier zugeordnet. Die Buffer 7 sind mit ihrem anderen Port mit dem eigentlichen Host-Prozessor 8 verbunden, der die empfangenen Dateninhalte auswertet und die vom FlexRay-Controller 1 zu sendenden Dateninhalte generiert bzw. aufbereitet. Der Host-Prozessor 8 kann dann über Daten- und/oder Steuerleitungen 9 mit Aktuatoren und/oder Sensoren verbunden sein.

In der Fig. 2 ist die Kommunikationsstruktur nach dem FlexRay-Protokoll vereinfacht dargestellt. Dabei existiert ein statischer und ein dynamischer Teil, wobei die Rahmen bzw. Slots im statischen Teil fest vorgegeben sind. Dabei ist die Rahmenstruktur derart, dass die Länge aller Rahmen A - C im statischen Teil gleichgroß ist. Bei den Rahmen D1 - D4 handelt es sich um dynamische Rahmen, deren Größe unterschiedlich sein kann. Statisch bedeutet dabei, dass der Rahmen A stets dem Identifier ID 01 zugeordnet ist. Diesem ist somit ein Zeitschlitz zugeordnet, in dem dieser Daten senden kann, aber nicht muss. Gleiches gilt für die Rahmen B und C für die Identifier ID 02 bzw. ID 03. Alle übrigen Steuergeräte, denen kein statischer Rahmen zugeordnet ist, können ihre Daten im dynamischen Rahmen senden. Dort findet dann analog zum Vorgehen bei CAN ein Arbitrierungsverfahren, welches sich jedoch von jenem bei CAN unterscheidet, statt. Im dargestellten Beispiel sendet also zuerst der Identifier ID 04, dann ID 05 und dann ID 06 und letztendlich ID 09, wobei die Identifier ID 07 und ID 08 zu diesem Zeitpunkt keine zu sendenden Daten aufweisen. Dabei ist die Darstellung in Fig. 2 stark schematisiert, da auf Grund des sogenannten Minisloting-Verfahrens zwischen den ID 06 und ID 09 eine gewisse Zeitspanne liegen muss, in der gewisse Mindestzeiten gewartet wird, ob die ID 07 bzw. ID 08 zu sendende Daten über den Bus senden wollen.

Der schematische Aufbau einer Daten-Botschaft ist in Fig. 3 dargestellt. Die Daten-Botschaft setzt sich zusammen aus einem Header HD, der auch den Identifier enthält, den eigentlichen Nutzdaten bzw. Payload PL sowie einen Trailer TR, der beispielsweise CRC-Daten enthält. Nach bisherigen FlexRay-Spezifikationen ist die maximale Payload pro Rahmen auf 254 Byte begrenzt, wobei die geplante nächste Generation FlexRay-Controllern nur noch auf eine maximale Payload von 32 Byte/Rahmen ausgelegt ist. Die bekannten FlexRay-Controller weisen dabei eine auf die maximale Payload ausgelegte Speichergröße für die Buffer auf, d.h. die Buffer der nächsten Generation weisen nur noch eine Speichergröße von 32 Byte auf, obwohl die FlexRay-Spezifikation größere Rahmen erlauben würde.

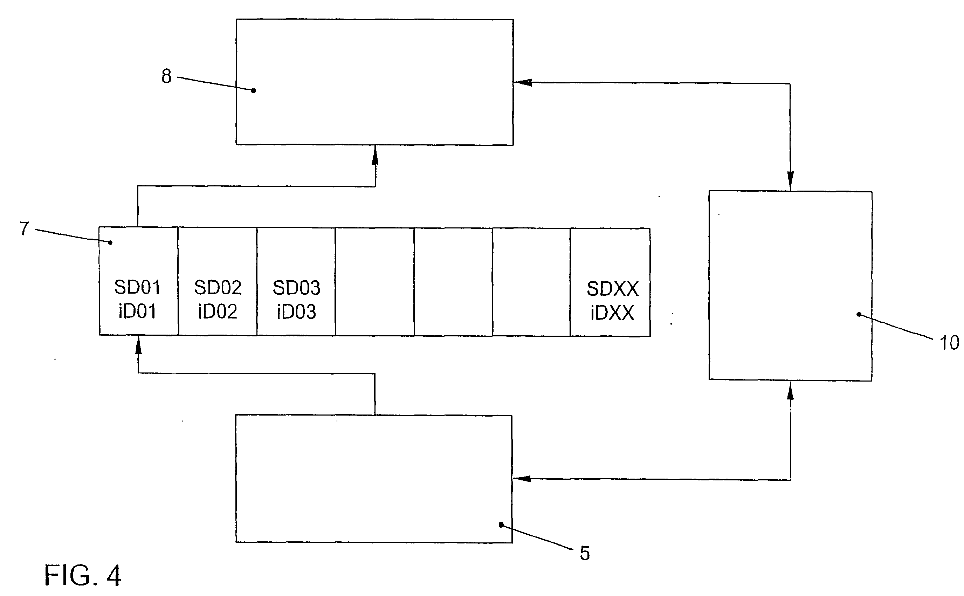

Erfingdungsgemäß erfolgt im Gegensatz hierzu eine flexible Speicherverwaltung, was nachfolgend an der Fig. 4 zunächst an einer nicht zur Erfindung zugehörigen Ausführungsform erläutert werden soll. Dabei umfasst der Speicher 6 wie im Stand der Technik eine Reihe von Buffern 7, wobei jedem Identifiers ID01 - IDXX ein Buffer 7 fest zugeordnet ist. Des Weiteren umfasst der Speicher 6 ein zentrales Speicherelement 10, das beispielsweise aus einer Vielzahl von Dual Ported RAMs verschiedener Größe zusammengesetzt ist. In den den Identifiern zugeordneten Buffern sind Steuerdaten SD01 - SDXX. Die Speichergröße der einzelnen Buffer 7 ist dabei vorzugsweise gleich groß und auf die Größe der Steuerdaten SD01 - SDXX ausgelegt, wohingegen die Payloads PL der Identifier ID01 - IDXX im Speicherelement 10 abgelegt sind. Die Steuerdaten SD01 - SDXX umfassen dabei beispielsweise eine Adresse, nämlich wo die zugeordnete Payload im Speicher 10 abgelegt ist. Weitere Steuerdaten können beispielsweise Statusinformationen über den Aktualisierungsgrad, den aktuellen Zugriff sowie die Festlegung, ob der Kommunikationscantroller 5 oder der Host-Prozessor 8 die Payload eingeschrieben hat, sein. Des weiteren kann in die Steuerdaten 5001 - SD XX eine Information über die Länge der Payload abgelegt sein, da zwar ein Kommunikationscontroller die Längeninformation beim Empfang immer aus dem Header entnehmen kann, aber ein lesender Host bzw. ein schreibender Controller keine Längeninformation haben. Der Verfahrensablauf ist dabei beispielsweise wie folgt: Der Kommunikationscontroller 5 empfängt eine Daten-Botschaft und erkennt beispielsweise aus dem Header, welchem Identifier ID die Daten-Botschaft zugeordnet ist sowie die Größe der Payload. Der Kommunikationscontroller 5 durchsucht dann das Speicherelement 10 nach einem freien Speicherplatz geeigneter Größe und schreibt die Payload dort ein. Entsprechend wird in die Steuerdaten SD des zugehörigen Identifiers die Adresse eingeschrieben und das Status-Bit für den Aktualisierungsgrad gesetzt. Dabei kann insbesondere den Identifier des statischen Teils eine Adresse bzw. ein Speicherbereich im Speicher 10 fest zugeordnet werden, da deren Rahmengröße vorab festgelegt ist, so dass sich das Speichermanagement ausschließlich auf die Identifier des dynamischen Teils erstrecken könnte. Entsprechend verläuft auch das Lesen der Daten durch den Host-Prozessor 8. Dieser steuert zunächst den zugehörigen Buffer 7 des gewünschten Identifiers an, erkennt ob es sich um neue Daten handelt und liest dann die Payload aus dem Speicherelement 10 aus, deren Adresse in den Steuerdaten hinterlegt war. Variiert nun während des Betriebes die Payload eines Identifiers, so wird jeweils ein an die Payload angepasster Speicherbereich im Speicherelement 10 ausgewählt. Setzt sich das Speicherelement 10 aus DPRAMs unterschiedlicher Größe von beispielsweise 8, 16, 32 und 64 Byte zusammen, so kann eine Payload von 254 Byte beispielsweise auf vier 64 Byte-RAMs aufgeteilt werden, deren Adressen in den Steuerdaten abgelegt sind. Der Vorteil dieser Ausführungsform ist die große Flexibilität, wobei jedoch die bekannte Struktur der FlexRay-Controller geändert wird. Insbesondere kann mit dem beschriebenen FlexRay-Controller flexibel auf geänderte Vorgaben, wie beispielsweise Rahmengrößen, reagiert werden.

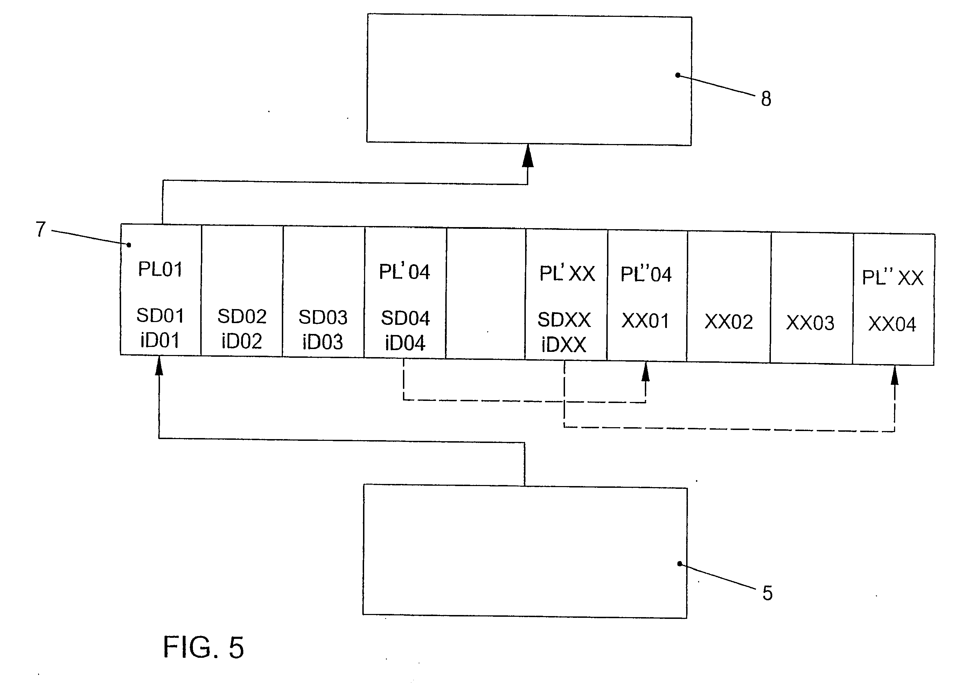

In der Fig. 5 ist eine erfindungsgemäße Ausführungsform, die hardwaretechnisch mit bekannten FlexRay-Controllem gemäß Fig. 1 identisch ist. Wieder ist jedem Identifier ID01 - IDXX fest ein Buffer 7 zugeordnet, wobei auch die zugehörige Payload PL zumindest teilweise in den Buffern 7 abgelegt ist. Normalerweise umfasst der Speicher 6 eines FlexRay-Controllers mehr Buffer 7 als Identifier ID verwendet werden, d.h., es existieren ungenutzte Buffer 7, die hier mit XX01 - XX04 bezeichnet sind. Diese ungenutzten Buffer XX01 - XX04 werden nun für ein dynamisches Speichermanagement genutzt. Hierzu sind die Steuerdaten beispielsweise wie folgt aufgebaut:

| | **Länge** | **Wert** |
|---|---|---|
| | | 0 = schreiben durch Host, lesen durch CC, |
| **r/w** | 1 Bit | 1 = schreiben durch CC, lesen durch Host |
| | | Verweis auf nächste Speicheradresse, |
| **next_pointer** | z.B. 12 Bit | 12 Bit = 4096 Adressen |
| | | 0 = Daten sind alt, |
| **update** | 1 Bit | 1 = Daten sind neu, bitte auslesen |
| | | 0 = Speicherblock frei, |
| **busy** | 1 Bit | 1 = Speicherblock wird zur Zeit bearbeitet |
| | | 0 = Speicherblock kann vergeben werden, |
| **married** | 1 Bit | 1 = Speicherblock bereits verknüpft |

Empfängt nun der Kommunikationsschalter 5 eine Daten-Botschaft mit einer Payload, die größer als der zugehörige Speicherplatz im zugeordneten Buffer 7 ist, so sucht der Kommunikationscontroller 5 einen freien Buffer XX01 - XX04, dessen married-Bit nicht gesetzt ist. Der Kommunikationscontroller 5 teilt dann die Payload auf, wobei ein Teil der Payload im Identifier zugeordneten Buffer 7 abgelegt wird und der übrige Teil im freien Buffer. Im dargestellten Ausführungsbeispiel wird die Payload PLXX in die Payload PL'XX und PL"XX aufgeteilt, wobei letztere im Buffer XX04 abgespeichert wird. Entsprechend müssen dann die Steuerdaten SDXX bzw. SDXX04 der beiden Buffer 7 geändert werden. In den Steuerdaten SDXX bleibt r/w = 1, wobei bei next_pointer die Adresse vom Buffer XX04 abgelegt wird. Das update- und married-Bit werden gesetzt und nach erfolgtem Vorgang das busy-Bit zurückgesetzt. In den Steuerdaten des Buffers XX04 muss das Bit r/w = 1 und mindestens das update- und married-Bit = 1 gesetzt werden. Möchte nun der Host-Prozessor 8 die Payload auslesen, so liest dieser die Steuerdaten SDXX aus. Anhand des update-Bits erkennt dieser, dass die Daten neu sind. Anhand der Adresse bei next_pointer erkennt dieser weiter, dass die Payload auf mindestens zwei Buffer aufgeteilt wurde. Nachdem die Daten ausgelesen wurden, wird das update-Bit zurückgesetzt, wobei das während des Lesens gesetzte busy-Bit nach dem Lesevorgang zurückgesetzt wird. Nach einem Zyklus wird dann der Speicher im Buffer XX04 gelöscht und das married-Bit zurückgesetzt, so dass der Buffer XX04 wieder für das dynamische Speichermanagement zur Verfügung steht. Da die Payload für die Identifier im statischen Teil fest ist, kann bei deren zugeordneten Buffern auf die Steuerdaten verzichtet werden, wenn deren Buffer für die Payload ausreichend groß ist. Ansonsten wird diesen Buffern wieder vorzugsweise ein anderer Buffer für die Verkettung fest zugewiesen, um das Speichermanagement zu vereinfachen. Ergänzend sei angemerkt, dass die Verkettung nicht auf zwei Buffer begrenzt ist, sondern gegebenenfalls drei oder noch mehr Buffer miteinander verkettet werden können, wobei dann jeweils bei next_printer die Adresse des nächsten Buffers der Kette steht.

Wie die Steuerdaten im Buffer abgelegt werden, muss vorab festgelegt werden, damit deren Bedeutungsinhalt beim Lesen bzw. Schreiben eindeutig ist. Dabei kann durch geeignete Plazierung des next_pointers der Adressierungsvorgang für den Host-Prozessor bzw. den Kommunikationscontroller vereinfacht werden. Dies soll anhand einiger Beispiele näher erläutert werden, wo angenommen wird, dass die Steuerdaten insgesamt zwei Byte und der next_pointer zwölf Bit lang sind. Dabei ist weiter anzumerken, dass die physikalischen Adressen der Buffer durchgehend nummeriert sind. Sei nun weiter angenommen, dass die Buffergröße 16 Byte beträgt, so sind die physikalischen Adressen des ersten Buffers von 0 bis 15, des zweiten Buffers von 16 bis 31, des dritten Buffers von 32 bis 47 und so weiter. Durch geeignete Plazierung des next_pointers sowie Maskierung der Status-Bits kann dann eine gewünschte Adresse ohne Shift-Operationen direkt aus den Steuerdaten ausgelesen werden. Soll nun beispielsweise jedes zweite Byte ansprechbar sein, so wird auf das erste Bit der Steuerdaten ein Status-Bit gelegt, gefolgt von den zwölf Bit des next_pointer und anschließend die restlichen Status-Bits. Da nur jedes zweite Byte angesprochen werden soll, ist das unterste Bit der Adresse immer Null. Um nun die Adresse aus den Steuerdaten direkt auszulesen, werden nun beispielsweise die 16-Bit Steuerdaten auf 16 Und-Gatter geführt, wobei am zweiten Eingang jedes Und-Gatters bei den Status-Bits fest eine Null und bei den next_pointer-Bits eine logische Eins anliegt. Somit werden die Status-Bits maskiert und die Adresse liegt stellengerecht am Ausgang der Und-Gatter an. Soll nun beispielsweise nur jedes 4, 8 oder 16 Byte ansprechbar sein, so muss der next_pointer jeweils immer nur um ein Bit nach links verschoben in den Steuerdaten plaziert werden. Im letzten Beispiel wären dann die ersten vier Bit der Steuerdaten die Status-Bit und die letzten zwölf Bit der next_pointer, wobei die ersten vier Adressbits für die Controller durch die Maskierung der Bits 0000 wären. Eine derart generierte Adresse würde somit das Ansprechen jedes 16 Bytes erlauben, ohne Shift-Operationen in den Controllern durchführen zu müssen.

Dabei sei angemerkt, dass auch eine Ausführungsform möglich ist, wo freie Buffer, die eigentlich fest bestimmten Identifiern zugeordnet sind, für das Speichermanagement zu verwenden. Hierbei signalisiert dann bei einem Zugriff das married-Bit, dass ein anderer Identifier gerade den Speicher über eine Verkettung benutzt. Dann wird die Payload in einem anderen Buffer abgespeichert und dessen Adresse im next_pointer eingetragen. Dabei muss nur sichergestellt sein, dass nicht beide Identifier im next_pointer eine Verkettung signalisieren möchten, d.h. ein fremder Identifier darf nicht den next_pointer in den Steuerdaten eines anderen fest zugeordneten Buffers benutzen.

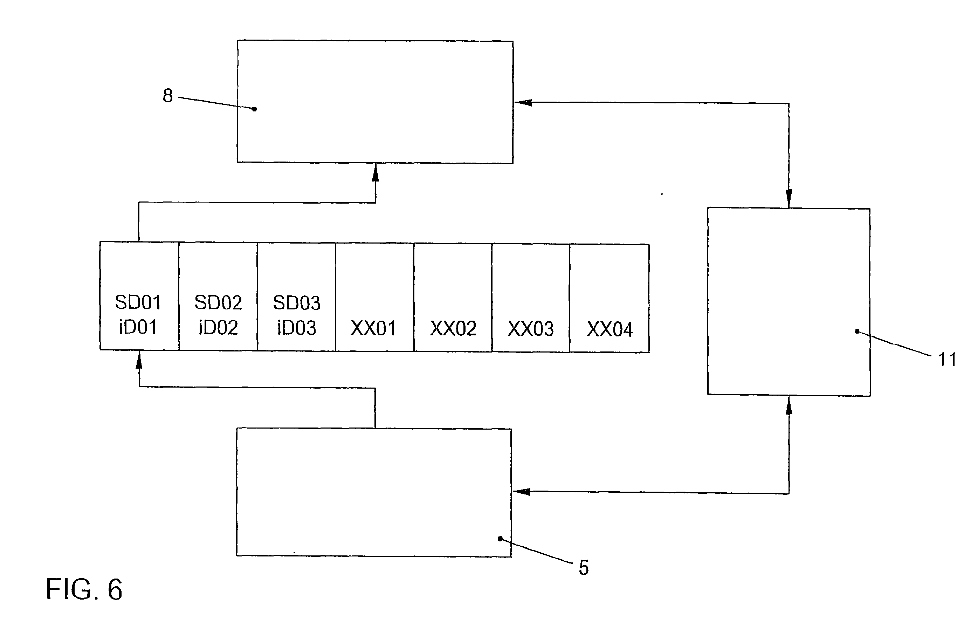

In der Fig. 6 ist eine weitere mögliche Ausführungsform dargestellt, wobei der Speicher wieder aus einer Kette von Buffern 7 besteht. Dabei ist allen Identifiern ID01 - ID03 des statischen Rahmens ein Identifier fest zugeordnet. Ist die Buffergröße größer/gleich der Payload, kann auf eine Verkettungsmöglichkeit verzichtet werden und nur die benötigten Status-Bits, wie beispielsweise update und busy, vorgesehen sein. Den übrigen Identifiern des dynamischen Teils ist kein Buffer fest zugeordnet. Vielmehr werden die übrigen freien Buffer dynamisch verwaltet, wobei die Zuordnung der Identifier ID04 - IDXX zu den Buffern in einer Tabelle 11 abgelegt ist. Empfängt nun der Kommunikationscontroller 5 eine Daten-Botschaft eines der Identifier ID04 - IDXX, so sucht der Kommunikationscontroller in der Tabelle einen freien Buffer und weist diesen dem Identifier mit seiner Payload zu. Gegebenenfalls findet dann wieder eine Verkettung mehrerer Buffer statt, wobei die Verkettung wieder über die Steuerdaten SD in den Buffern erfolgt. Die erste Zuordnung Identifier - Buffer wird dann in der Tabelle 11 eingetragen. Entsprechend sucht der Host-Prozessor in der Tabelle 11, welchem Buffer 7 ein bestimmter Identifier zugeordnet ist. Der Vorteil dieses Verfahrens ist das noch effektivere Speichermanagement.

## Patentansprüche

1. Netzwerkknoten (1) zum Senden und Empfangen von Daten-Botschaften, umfassend einen Kommunikationscontroller (5), einen Host-Prozessor (8) und einen zwischen dem Host-Prozessor und dem Kommunikationscontroller angeordneten Speicher (6), wobei jeder Daten-Botschaft ein Identifier (ID) zugeordnet ist und in dem Speicher des Netzwerkknotens (1) eine Anzahl von Buffern (7) angeordnet ist, wobei die Anzahl der Buffer (7) größer als die Anzahl der Identifier (ID) ist und jedem Identifier (ID) fest ein Buffer (7) zugeordnet ist, wobei die ungenutzten Buffer (XX01-XX04) für ein dynamisches Speichermanagement genutzt werden, wobei in mindestens einigen der den Identifiern (ID) zugeordneten Buffern (7) Steuerdaten (SD01-SDXX) abgelegt sind, die mindestens einen Verweis auf die zum Identifier (ID) zugehörigen Nutzdaten (PL) enthalten, wobei die Buffer (7) in einen Teil für Steuerdaten (SD01-SDXX) und einen Teil für Nutzdaten (PL) unterteilt sind, wobei die zugehörigen Nutzdaten (PL) teilweise im zugehörigen Buffer (7) des Identifiers (ID) und in einem anderen ungenutzten Buffer (XX01-XX04) abgelegt sind, wobei die Steuerdaten (SD01-SDXX, SDXX01-04) mindestens ein Status-Bit umfassen, aus dem die Belegung bzw. Verknüpfung des den Nutzdaten (PL) zugeordneten Teils des Buffers (7, XX01-XX04) erfassbar ist, wobei der Verweis eine Adresse des mit Nutzdaten (PL) belegten anderen Buffers (XX01-XX04) umfasst.

2. Netzwerkknoten nach Anspruch 1, **dadurch gekennzeichnet, dass** die Speichergröße aller Buffer (7) gleich ist.

3. Netzwerkknoten nach einem der vorangegangenen Ansprüche, **dadurch gekennzeichnet, dass** die Steuerdaten (SD01 - SDXX) mindestens ein Status-Bit umfassen, aus dem die Kommunikationsrichtung der Nutzdaten zwischen dem Host-Prozessor (8) und dem Kommunikationscontroller (5) erfassbar ist.

4. Netzwerkknoten nach einem der vorangegangenen Ansprüche, **dadurch gekennzeichnet, dass** die Steuerdaten (SD01 - SDXX) mindestens ein Status-Bit umfassen, aus dem der Aktualisierungsstand der Nutzdaten (PL) erfassbar ist.

5. Netzwerkknoten nach einem der vorangegangenen Ansprüche, **dadurch gekennzeichnet, dass** die Steuerdaten (SD01 - SDXX) mindestens ein Status-Bit umfassen, aus dem ein aktueller Zugriff auf den Buffer (7) erfassbar ist.

6. Netzwerkknoten nach einem der vorangegangenen Ansprüche, **dadurch gekennzeichnet, dass** die Steuerdaten (SD01 - SDXX) mindestens eine Information umfassen, aus der die Länge der abgespeicherten Nutzdaten (PL) ermittelbar ist.

7. Netzwerkknoten nach einem der vorangegangenen Ansprüche, **dadurch gekennzeichnet, dass** die Adresse der abgelegten Nutzdaten (PL) derart in den Steuerdaten (SD01 - SDXX) platziert ist, dass diese ohne Shift-Operationen durch Maskierung der Status-Bits auslesbar ist.

8. Verfahren zur Speicherverwaltung eines Speichers zwischen einem Kommunikationscontroller (5) und einem Host-Prozessor (8) eines Netzwerkknotens (1) zum Senden und Empfangen von Daten-Botschaften in einem Netzwerk, wobei jeder Daten-Botschaft ein Identifier (ID) zugeordnet ist und in dem Speicher eines Netzwerkknotens eine Anzahl von Buffern (7) angeordnet ist, wobei die Anzahl der Buffer (7) größer als die Anzahl der Identifier (ID) ist und jedem Identifier (ID) fest ein Buffer (7) zugeordnet ist, wobei die ungenutzten Buffer (XX01-XX04) für ein dynamisches Speichermanagement genutzt werden, wobei die Buffer (7) in einen Teil für die Steuerdaten (SD01-SDXX) und einen Teil für die Nutzdaten (PL) unterteilt sind, wobei in mindestens einigen der den Identifiern (ID) zugeordneten Buffern (7) Steuerdaten (SD01 - SDXX) abgelegt sind, wobei der Kommunikationscontroller (5) beim Empfang der Nutzdaten (PL) eines Identifiers (ID) deren Länge erfasst, die Nutzdaten (PL) aufteilt, einen Teil der Nutzdaten in dem den Identifier zugeordneten Buffer (7) ablegt und den übrigen Teil der Nutzdaten in einem anderen Buffer (XX01-XX04) ablegt und in den Steuerdaten (SD01-SDXX) des dem Identifier (ID) zugeordneten Buffers (7) einen Verweis einschreibt, wo der übrige Teil der Nutzdaten (PL) abgelegt ist, wobei die Steuerdaten (SD01-SDXX, SDXX01-04) mindestens ein Status-Bit umfassen, aus dem die Belegung bzw. Verknüpfung des den Nutzdaten (PL) zugeordneten Teils des Buffers (7, XX01-XX04) erfassbar ist, wobei der Verweis eine Adresse des mit Nutzdaten (PL) belegten anderen Buffers (XX01-XX04) umfasst.

9. Verfahren nach Anspruch 8, **dadurch gekennzeichnet, dass** der Host-Prozessor (8) zum Auslesen der Nutzdaten (PL) eines Identifiers (ID) zunächst die Steuerdaten (SD01 - SDXX) des zugeordneten Buffers (7) ausliest und entsprechend des hinterlegten Verweises den dort adressierten Speicherbereich ausliest.

10. Verfahren nach Anspruch 8 oder 9, **dadurch gekennzeichnet, dass** vom Netzwerkknoten zu sendende Nutzdaten (PL) vom Host-Prozessor (8) aufbereitet werden, der Host-Prozessor (8) die Länge der Nutzdaten (PL) erfasst und in dem zugeordneten Buffer (7) des Identifiers (ID) des Netzwerkknotens und in einem anderen Buffer (7) abspeichert und in den Steuerdaten (SD1 - SDXX) des zugeordneten Identifiers (ID) die Adresse der abgespeicherten Nutzdaten (PL) einschreibt.

11. Verfahren nach einem der Ansprüche 8 - 10, **dadurch gekennzeichnet, dass** der Host-Prozessor (8) und der Kommunikationscontroller (5) beim Schreiben von Nutzdaten (PL) ein update-Bit setzen und nach dem korrekten Lesen zurücksetzen.

12. Verfahren nach einem der Ansprüche 8 - 11, **dadurch gekennzeichnet, dass** der Host-Prozessor (8) und der Kommunikationscontroller (5) beim Lesen oder Schreiben in den Steuerdaten (SD01 - SDXX) des Buffers (7) ein Busy-Bit setzen und nach dem Vorgang zurücksetzen.

## Claims

1. Network node (1) for sending and receiving data messages, comprising a communication controller (5), a host processor (8) and a memory (6) arranged between the host processor and the communication controller, wherein each data message has an associated identifier (ID) and the memory in the network node (1) contains a number of buffers (7), wherein the number of buffers (7) is greater than the number of identifiers (ID) and each identifier (ID) has a firmly associated buffer (7), wherein the unused buffers (XX01-XX04) are used for dynamic memory management, wherein at least some of the buffers (7) associated with the identifiers (ID) store control data (SD01-SDXX) which contain at least one reference to the payload (PL) associated with the identifier (ID), wherein the buffers (7) are divided into a portion for control data (SD01-SDXX) and a portion for payload (PL), wherein the associated payload (PL) are stored partly in the associated buffer (7) of the identifier (ID) and in another unused buffer (XX01-XX04), wherein the control data (SD01-SDXX, SDXX01-04) comprise at least one status bit from which it is possible to detect the occupancy or linking of the portion of the buffer (7, XX01-XX04) which is associated with the payload (PL), wherein the reference comprises an address for the other buffer (XX01-XX04) occupied by payload (PL).

2. Network node according to Claim 1, **characterized in that** the memory size of all buffers (7) is the same.

3. Network node according to one of the preceding claims, **characterized in that** the control data (SD01-SDXX) comprise at least one status bit from which it is possible to detect the direction of communication for the payload between the host processor (8) and the communication controller (5) .

4. Network node according to one of the preceding claims, **characterized in that** the control data (SD01-SDXX) comprise at least one status bit from which it is possible to detect the update state of the payload (PL).

5. Network node according to one of the preceding claims, **characterized in that** the control data (SD01-SDXX) comprise at least one status bit from which it is possible to detect current access to the buffer (7).

6. Network node according to one of the preceding claims, **characterized in that** the control data (SD01-SDXX) comprise at least one piece of information from which it is possible to ascertain the length of the stored payload (PL).

7. Network node according to one of the preceding claims, **characterized in that** the address of the stored payload (PL) is positioned in the control data (SD01-SDXX) such that the latter can be read without shift operations by masking the status bits.

8. Method for memory management in a memory between a communication controller (5) and a host processor (8) in a network node (1) for sending and receiving data messages in a network, wherein each data message has an associated identifier (ID) and the memory in a network node contains a number of buffers (7), wherein the number of buffers (7) is greater than the number of identifiers (ID) and each identifier (ID) has a firmly associated buffer (7), wherein the unused buffers (XX01-XX04) are used for dynamic memory management, wherein the buffers (7) are divided into a portion for the control data (SD01-SDXX) and a portion for the payload (PL), wherein at least some of the buffers (7) associated with the identifiers (ID) store control data (SD01-SDXX), wherein the communication controller (5), on receiving the payload (PL) from an identifier (ID), detects the length thereof, splits the payload (PL), stores a portion of the payload in the buffer (7) associated with the identifier and stores the other portion of the payload in another buffer (XX01-XX04) and writes a reference to where the other portion of the payload (PL) is stored into the control data (SD01-SDXX) in the buffer (7) associated with the identifier (ID), wherein the control data (SD01-SDXX, SDXX01-04) comprise at least one status bit from which it is possible to detect the occupancy or linking of the portion of the buffer (7, XX01-XX04) which is associated with the payload (PL), wherein the reference comprises an address for the other buffer (XX01-XX04) occupied by payload (PL).

9. Method according to Claim 8, **characterized in that** the host processor (8) reads the payload (PL) from an identifier (ID) by first of all reading the control data (SD01-SDXX) in the associated buffer (7) and reading the memory area addressed therein in line with the stored reference.

10. Method according to Claim 8 or 9, **characterized in that** payload (PL) to be sent by the network node are conditioned by the host processor (8), the host processor (8) detects the length of the payload (PL) and stores it in the associated buffer (7) for the identifier (ID) of the network node and in another buffer (7) and writes the address of the stored payload (PL) into the control data (SD01-SDXX) in the associated identifier (ID).

11. Method according to one of Claims 8 - 10, **characterized in that** the host processor (8) and the communication controller (5) set an update bit when writing payload (PL) and reset it after correct reading.

12. Method according to one of Claims 8 - 11, **characterized in that** the host processor (8) and the communication controller (5) set a busy bit in the control data (SD01-SDXX) when reading or writing and reset it after the operation.

## Revendications

1. Noeud de réseau (1) pour émettre et recevoir des messages de données, comprenant un contrôleur de communication (5), un processeur hôte (8) et une mémoire (6) disposée entre le processeur hôte et le contrôleur de communication, un identifiant (ID) étant associé à chaque message de données et un certain nombre de tampons (7) étant disposé dans la mémoire du noeud de réseau (1), le nombre de tampons (7) étant supérieur au nombre d'identifiants (ID) et un tampon (7) étant associé de manière fixe à chaque identifiant (ID), les tampons inutilisés (XX01 - XX04) étant utilisés pour une gestion dynamique de la mémoire, des données de commande (SD01 - SDXX) qui contiennent au moins un renvoi aux données utiles (PL) associées à l'identifiant (ID) étant déposées dans au moins quelques uns des tampons (7) associés aux identifiants (ID), les tampons (7) étant divisés en une partie pour les données de commande (SD01 - SDXX) et une partie pour les données utiles (PL), les données utiles (PL) associées étant en partie déposées dans le tampon (7) associé de l'identifiant (ID) et dans un autre tampon inutilisé (XX01 - XX04), les données de commande (SD01 - SDXX, SDXX01-04) comprenant au moins un bit d'état à partir duquel peut être détectée l'affectation ou la liaison de la partie du tampon (7, XX01 - XX04) associée aux données utiles (PL), le renvoi comprenant une adresse de l'autre tampon (XX01 - XX04) occupé par des données utiles (PL).

2. Noeud de réseau selon la revendication 1, **caractérisé en ce que** la taille de la mémoire de tous les tampons (7) est la même.

3. Noeud de réseau selon l'une des revendications précédentes, **caractérisé en ce que** les données de commande (SD01 - SDXX) comprennent au moins un bit d'état à partir duquel peut être détecté le sens de la communication des données utiles entre le processeur hôte (8) et le contrôleur de communication (5).

4. Noeud de réseau selon l'une des revendications précédentes, **caractérisé en ce que** les données de commande (SD01 - SDXX) comprennent au moins un bit d'état à partir duquel peut être détecté le niveau d'actualisation des données utiles (PL).

5. Noeud de réseau selon l'une des revendications précédentes, **caractérisé en ce que** les données de commande (SD01 - SDXX) comprennent au moins un bit d'état à partir duquel peut être détecté un accès actuel au tampon (7).

6. Noeud de réseau selon l'une des revendications précédentes, **caractérisé en ce que** les données de commande (SD01 -- SDXX) comprennent au moins une information à partir de laquelle peut être déterminée la longueur des données utiles (PL) mémorisées.

7. Noeud de réseau selon l'une des revendications précédentes, **caractérisé en ce que** l'adresse des données utiles (PL) déposées est positionnée dans les données de commande (SD01 - SDXX) de telle sorte que celle-ci peut être extraite sans opérations de décalage par un masquage des bits d'état.

8. Procédé de gestion d'une mémoire entre un contrôleur de communication (5) et un processeur hôte (8) d'un noeud de réseau (1) pour émettre et recevoir des messages de données dans un réseau, un identifiant (ID) étant associé à chaque message de données et un certain nombre de tampons (7) étant disposé dans la mémoire d'un noeud de réseau, le nombre de tampons (7) étant supérieur au nombre d'identifiants (ID) et un tampon (7) étant associé de manière fixe à chaque identifiant (ID), les tampons inutilisés (XX01 - XX04) étant utilisés pour une gestion dynamique de la mémoire, les tampons (7) étant divisés en une partie pour les données de commande (SD01 - SDXX) et une partie pour les données utiles (PL), des données de commande (SD01 - SDXX) étant déposées dans au moins quelques uns des tampons (7) associés aux identifiants (ID), le contrôleur de communication (5), lors de la réception des données utiles (PL) d'un identifiant (ID), détectant leur longueur, divisant les données utiles (PL), déposant une partie des données utiles dans le tampon (7) associé à l'identifiant et déposant la partie restante des données utiles dans un autre tampon (XX01 - XX04) et inscrivant dans les données de commande (SD01 - SDXX) du tampon (7) associé à l'identifiant (ID) un renvoi vers l'endroit où est déposée la partie restante des données utiles (PL), les données de commande (SD01 - SDXX, SDXX01-04) comprenant au moins un bit d'état à partir duquel peut être détectée l'affectation ou la liaison de la partie du tampon (7, XX01 - XX04) associée aux données utiles (PL), le renvoi comprenant une adresse de l'autre tampon (XX01 - XX04) occupé par des données utiles (PL) .

9. Procédé selon la revendication 8, **caractérisé en ce que** le processeur hôte (8), pour extraire les données utiles (PL) d'un identifiant (ID), lit tout d'abord les données de commande (SD01 - SDXX) du tampon (7) associé et lit la zone de mémoire qui y est adressée conformément au renvoi stocké,

10. Procédé selon la revendication 8 ou 9, **caractérisé en ce que** les données utiles (PL) à émettre par le noeud de réseau sont préparées par le processeur hôte (8), le processeur hôte (8) détecte la longueur des données utiles (PL) et les mémorise dans le tampon associé (7) de l'identifiant (ID) du noeud de réseau et dans un autre tampon (7), puis inscrit dans les données de commande (SD01 - SDXX) de l'identifiant associé (ID) l'adresse des données utiles (PL) mémorisées.

11. Procédé selon l'une des revendications 8 à 10, **caractérisé en ce que** le processeur hôte (8) et le contrôleur de communication (5) mettent à 1 un bit de mise à jour lors de l'écriture des données utiles (PL) et le remettent à 0 après la lecture correcte.

12. Procédé selon l'une des revendications 8 à 11, **caractérisé en ce que** le processeur hôte (8) et le contrôleur de communication (5) mettent à un bit d'occupation lors de la lecture ou de l'écriture dans les données de commande (SD01 - SDXX) du tampon (7) et le remettent à 0 après l'opération.
